Europäisches Patentamt

European Patent Office

Office européen des brevets

(11) Publication number: **0 083 654 B1**

# EUROPEAN PATENT SPECIFICATION

(45) Date of publication of patent specification: **21.10.87**

(21) Application number: **82902603.8**

(22) Date of filing: **22.07.82**

(86) International application number:
**PCT/US82/00994**

(87) International publication number:
**WO 83/00338 03.02.83 Gazette 83/04**

(51) Int. Cl.⁴: **C 08 K 3/38, C 08 K 3/10, C 08 K 3/34, C 25 C 3/08, C 25 B 11/00, C 25 C 7/02, C 25 D 17/10, C 25 B 11/12**

(54) **REFRACTORY HARD MATERIAL-CARBON FIBER CATHODE COATINGS FOR ALUMINUM REDUCTION CELLS.**

(30) Priority: **27.07.81 US 286781**
**09.07.82 US 395343**
**09.07.82 US 395344**
**09.07.82 US 395345**

(43) Date of publication of application:
**20.07.83 Bulletin 83/29**

(45) Publication of the grant of the patent:
**21.10.87 Bulletin 87/43**

(84) Designated Contracting States:
**DE FR GB**

(56) References cited:
**EP-A-0 021 850**
**EP-A-0 042 658**
**CA-A- 650 661**
**US-A-3 429 759**
**US-A-3 714 111**
**US-A-3 787 300**
**US-A-3 820 290**
**US-A-3 932 244**
**US-A-4 093 524**
**US-A-4 186 075**
**US-A-4 308 115**

(73) Proprietor: **COMMONWEALTH ALUMINUM CORPORATION**
**3 Bethesda Metro Center Suite 1100**
**Bethesda Maryland 20814 (US)**

(72) Inventor: **BUCHTA, William Mark**
**1013 Francis Avenue**
**Baltimore, MD 21227 (US)**
Inventor: **NAGLE, Dennis Charles**
**6618 Hunters Wood Circle**
**Baltimore, MD 21228 (US)**

(74) Representative: **Thomas, Roger Tamlyn et al**
**D. Young & Co. 10 Staple Inn**
**London WC1V 7RD (GB)**

Courier Press, Leamington Spa, England.

## Description

This invention relates to coating compositions for the cathode surface of an aluminum reduction cell, methods for producing aluminum wettable cathode surfaces as well as aluminum-wettable cathodes for aluminum cells.

The manufacture of aluminum is conducted conventionally by the Hall-Heroult electrolytic reduction process, whereby aluminum oxide is dissolved in molten cryolite and electrolized at temperatures of from 900°C to 1000°C. This process is conducted in a reduction cell typically comprising a steel shell provided with an insulating lining of suitable refractory material, which is in turn provided with a lining of carbon which contacts the molten constituents. One or more anodes, typically made of carbon, are connected to the positive pole of a direct current source, and suspended within the cell. One or more conductor bars connected to the negative pole of the direct source are embedded in the cathode substrate comprising the floor of the cell, thus causing the cathode substrate to become cathodic upon application of current. If the cathode substrate comprises a carbon lining it typically is constructed from an array of prebaked cathode blocks, rammed together with a mixture typically of anthracite, graphite, coke, and coal tar pitch.

In this conventional design of the Hall-Heroult cell, the molten aluminum pool or pad formed during electrolysis itself acts as part of the cathode system. The life span of the carbon lining or cathode material may average three to eight years, but may be shorter under adverse conditions. The deterioration of the carbon lining material is due to erosion and penetration of electrolyte and liquid aluminum as well as intercalation of metallic sodium, which causes swelling and deformation of the carbon blocks and ramming mix.

US Patent No. 3932244 describes a process for recovering useful material from failed reduction cell carbon linings. In particular, this patent indicates that aluminum reduction cell linings can be made from an aggregate comprising carbonaceous material recovered by hydration of used aluminum reduction cell linings (i.e. an aggregate consisting of such material alone or in mixture with new carbon lining material) by mixing with the aggregate a binder material comprising an alkaline catalysable furane binder.

Difficulties in cell operation have included surface effects on the carbon cathode beneath the aluminum pool, such as the accumulation of undissolved material (sludge or muck) which forms insulating regions on the cell bottom. Penetration of cryolite through the carbon body causes heaving of the cathode blocks. Aluminum penetration to the iron cathode bars results in excessive iron content in the aluminum metal, or in more serious cases a tap-out. Another serious drawback of the carbon cathode is its non-wetting by aluminum, necessitating the maintenance of a substantial height of pool or pad of metal in order to ensure an effective molten aluminum contact over the cathode surface. One problem of maintaining such an aluminum pool is that electromagnetic forces create movements and standing waves in the molten aluminum. To avoid shorting between the metal and the anode, the anode-to-cathode distance (ACD) must be kept at a safe 4 to 6 cms in most designs. For any given cell installation there is a minimum ACD below which there is serious loss of current efficiency, due to shorting of the metal (aluminum) pad to the anode, resulting from instability of the metal pad, combined with increased back reaction under highly stirred conditions. The electrical resistance of the inter-electrode distance traversed by the current through the electrolyte causes a voltage drop in the range of 1.4 to 2.7 volts, which represents from 30 to 60 percent of the voltage drop in a cell, and is the largest single voltage drop in a given cell.

To reduce ACD and associated voltage drop, extensive research using Refractory Hard Materials (RHM), such as $TiB_2$, as cathode materials has been carried out since the 1950's. $TiB_2$ is only very slightly soluble in aluminum, is highly conductive, and is wetted by aluminum. This property of wettability allows an aluminum film to be electrolytically deposited directly on a RHM cathode surface, and avoids the necessity for an aluminum pad. Because titanium diboride and similar Refractory Hard Materials are wetted by aluminum, resist the corrosive environment of a reduction cell, and are excellent electrical conductors, numerous cell designs utilizing Refractory Hard Materials have been proposed in an attempt to save energy, in part by reducing anode-to-cathode distance in drained cathode cells, or by minimizing back reaction by stabilizing the aluminum pad in conventional cells.

US Patent No. 3429759 describes the use of titanium diboride in cements for joining carbonaceous articles, particularly for cements intended for high temperature use. The titanium diboride is present in the cements as particles with a particle size of less than 74 µm, together with a carbonisable binder comprising 25 weight % furfural, 25 weight % furfuryl alcohol and 50 weight % phenol formaldehyde.

The use of titanium diboride current-conducting elements in electrolytic cells for the production or refining of aluminum is described in the following exemplary U.S. patents: 2,915,442, 3,028,324, 3,215,615, 3,314,876, 3,330,756, 3,156,639, 3,274,093, and 3,400,061. Despite the rather extensive effort expended in the past, as indicated by these and other patents, and the potential advantages of the use of titanium diboride as a current-conducting element, such compositions do not appear to have been commercially adopted on any significant scale by the aluminum industry. Lack of acceptance of $TiB_2$ or RHM current-conducting elements of the prior art is related to their lack of stability in service in electrolytic reduction cells. It has been reported that such current-conducting elements fail after relatively short periods in service. Such failure has been associated with the penetration of the current-conducting element structures by the electrolyte, and/or aluminum, thereby causing critical weakening of the self-bonded RHM structure with consequent cracking and failure. It is well known that liquid phases penetrating the grain boundaries of solids can have undesirable effects. For example, oxygen impurities segregate along grain boundaries between $TiB_2$ crystals, making them susceptible to rapid attack by aluminum metal and/or cryolite bath. Prior art techniques to combat $TiB_2$ tile disintegration in aluminum cells have been to use highly refined $TiB_2$ powder to make the tile containing less than 50 ppm oxygen at 3 to 4 times the cost of commercially pure $TiB_2$ powder containing about 3000 ppm oxygen. Moreover, fabrication further increases the cost of such tiles substantially. However, no cell utilizing $TiB_2$ tiles is known to have operated successfully for extended periods without loss of adhesion of the tiles to the cathode, or disintegration of the tiles. Other reasons proposed for failure of RHM tiles and coatings have been the solubility of the composition in molten aluminum or molten flux, or the lack of mechanical strength and resistance to thermal shock. Additionally, different types of $TiB_2$ coating materials, applied to carbon substrates, have failed due to differential thermal expansion between the titanium diboride material and the carbon cathode block. To our knowledge no prior RHM-containing materials have been successfully applied as coatings to a commercially employed cathode substrate because of thermal expansion mismatch, bonding problems, etc.

For example, U.S. Patent 3,400,061, of Lewis et al, assigned to Kaiser Aluminum, teaches a cell construction with a drained and wetted cathode, wherein the Refractory Hard Material cathode surface consists of a mixture of Refractory Hard Material, at least 5 percent carbon, and generally 10 to 20% by weight pitch binder, baked at 900°C or more. According to the patent, such a composite cathode has a higher degree of dimensional stability than previously available. The composite cathode coating material of this reference may be rammed into place in the cell bottom. This technique has not been widely adopted, however, due to susceptibility to attack by the electrolytic bath, as taught by a later Kaiser Aluminum U.S. Patent, Number 4,039,524 of Payne.

Said U.S. Patent 4,093,524, of Payne, claims an improved method of bonding titanium diboride, and other Refractory Hard Materials; to a conductive substrate such as graphite; or to silicon carbide. The cathode surface is made from titanium diboride tiles, 0.3 to 2.5 cm thick. However, the large differences in thermal expansion coefficients between such Refractory Hard Material tiles and carbon precludes the formation of a bond which will be effective both at room temperature and at operating temperatures of the cell. The bonding is accordingly formed in-situ at the interface between the Refractory Hard Material tile and the carbon by a reaction between aluminum and carbon to form aluminum carbide near the cell operating temperature. However, since the bond is not formed until high temperatures are reached, tiles are easily displaced during startup procedures. The bonding is accelerated by passing electrical current across the surface, resulting in a very thin aluminum carbide bond. However, aluminum and/or electrolyte attack upon the bond results if the tiles are installed too far apart, and if the plates are installed too close together, they bulge at operating temperature, resulting in rapid deterioration of the cell lining and in disturbance of cell operations. Accordingly, this concept has not been extensively utilized.

Holliday, in U.S. Patent 3,661,736, claims a cheap and dimensionally stable composite cathode for a drained and wetted cell, comprising particles or chunks of arc-melted "RHM alloy" embedded in an electrically conductive matrix. The matrix consists of carbon or graphite and a powdered filler such as aluminum carbide, titanium carbide or titanium nitride. However, in operation of such a cell, electrolyte and/or aluminum attack grain boundaries in the chunks of arc-melted Refractory Hard Material alloy, as well as the large areas of carbon or graphite matrix, at the rate of about one centimeter per annum, leading to early destruction of the cathodic surface.

U.S. Patent 4,308,114, of Das et al, discloses a cathode surface comprised of Refractory Hard Material in a graphitic matrix. In this case, the Refractory Hard Material is composited with a pitch binder, and subjected to graphitization at 2350°C, or above. Such cathodes are subject to early failure due to rapid ablation, and possible intercalation and erosion of the graphite matrix.

In addition to the above patents, a number of other references relate to the use of titanium diboride in tile form. Titanium diboride tiles of high purity and density have been tested, but they generally exhibit poor thermal shock resistance and are difficult to bond to carbon substrates employed in conventional cells. Mechanisms of de-bonding are believed to involve high stresses generated by the thermal expansion mismatch between the titanium diboride and carbon, as well as aluminum penetration along the interface between the tiles and the adhesive holding the tiles in place, due to wetting of the bottom surface of the tile by aluminum. In addition to debonding, disintegration of even high purity tiles may occur due to aluminum penetration of grain boundaries. These problems, coupled with the high cost of the titanium diboride tiles, have discouraged extensive commercial use of titanium diboride in conventional electrolytic cells, and limited its use in new cell design. We have now found it possible to overcome the deficiencies of past attempts to utilize Refractory Hard Materials as a surface coating for carbon cathode blocks, and for monolithic rammed cathode surfaces.

In accordance with the invention, there is provided a composition for coating the cathode surface of an aluminum reduction cell, said coating composition comprising Refractory Hard Material, a resin selected from phenolic resins, furane resin precursors, and mixtures thereof, mix liquid, curing agent, particulate carbonaceous filler having a particle size of less than 100 mesh, and carbonaceous additive in the form of particulate material having a particle size greater than 100 mesh and-or carbon fibers.

A coating composition of the invention may be formed from carbon cement, intimately mixed with carbonaceous additive and Refractory Hard Material. The principal components of the coating composition are phenolic resin and/or furane resin precursor, mix liquid, curing agents, carbonaceous filler, carbonaceous additives, and RHM. The coating composition may be applied to a cathode substrate and cured and carbonized to a relatively hard, tough, surface consisting of Refractory Hard Material in a largely non-graphitizing matrix. A preferred coating composition of this invention incorporates carbon fibers, which act as crack arrestors as the coating material undergoes shrinkage during curing and carbonization. Sufficient RHM is conveniently incorporated in the coating composition to ensure continuous aluminum wetting of the surface. Thus, the coating composition provides an economic and effective means to obtain the advantages of RHM in cathodes, and eliminates the need for more costly titanium diboride tiles.

According to the present invention, it has been found that cathode structures may be coated with Refractory Hard Material combined with specified bonding agents to improve the conventional carbon lining of an aluminum reduction cell. Such coated cathodes combine the advantages of conventional carbon linings, such as structural integrity and low cost, with desired properties attained by use of the Refractory Hard Materials. Such improvements include wettability by molten aluminum, low solubility in the molten aluminum-cryolite environment, and good electrical conductivity. In addition, the present invention is applicable to existing reduction cells without the cost and time of complete cell redesign, or the high cost of production of pure $TiB_2$ tiles or $TiB_2$ alloy tiles suggested by prior art. The coating composition of the present invention may also be used in cell designs which utilize sloped anodes and cathodes.

The "coating composition" of the present invention comprises Refractory Hard Material, carbon cement, and carbonaceous additive. As used herein, the terms "coating composition" or "coating material" is intended to encompass the uncured combination of all of these materials. The term "coating", on the other hand, may comprise less, depending on state of drying, cure, or carbonization, since for example, mix liquid may be evaporated, and/or polymerized, during cure and carbonization.

The "Refractory Hard Materials" are defined as the borides, carbides, silicides, and nitrides of the transition metals in the fourth to sixth group of the periodic system, often referred to as Refractory Hard Metals, and alloys thereof.

"Carbon cement" is intended to mean a commercially available carbonaceous cement or adhesive, comprising a phenolic resin binder and/or a furane resin precursor, mix liquid, carbonaceous filler and curing agents, the solid and liquid portions of which may be packaged separately to increase shelf life, or as a premixed cement. Gas release agents, and/or modifying agents may be present in such systems, or may be added thereto for use in the present invention. Carbonaceous additives are added to carbon cements for use in the present invention if not present in a commercially available formation.

The term "carbon cement system" encompasses carbon cement plus carbonaceous additive, or, coating composition minus RHM.

The "mix liquid" of the present invention constitutes the liquid phase or liquid component of the carbon cement, and functions in a variety of manners in the coating composition of the present invention, depending upon specific composition. It may be present to allow easy and uniform mixing of the solid components of the coating composition and to provide an easily spreadable mass. Certain mix liquids, such as furfural, may also permit an increase in the amount of carbonaceous filler which may be incorporated in the coating composition. The mix liquid may also enhance internal bonding and bonding between the coating and the carbon substrate, if it is a solvent containing the resin, and/or constitutes a polymerizable or cross-linking resin component of the carbon cement. This is because a dissolved or liquid resin may more easily penetrate and impregnate permeable constituents of the coating, as well as the carbon substrate. The mix liquid also permits wicking of the resin into interstitial voids between particles of the coating composition by capillary action. The mix liquid may act solely as a solvent for the resin (already present in the solids portion of the carbon cement), such as methyl ethyl ketone (which could dissolve a novolac if present in the solids), and be evaporated during cure and carbonization operations. If, on the other hand, the mix liquid is present simply as an inert carrier liquid, then it too may be evaporated during cure and carbonization. Otherwise, the mix liquid may function as a combined solvent and resin former, such as furfuryl alchol and furfural, part of which volatilizes during heating while the remainder becomes incorporated into the cured resin of the carbon cement. In another instance, the mix liquid may be the carbon cement resin per se, such as where the carbon cement is a liquid such as furfural (usually employed in combination with phenol), furfuryl alcohol, or low polymers of these, or a resole. The mix liquid may also comprise the resin component of the carbon cement in the case of a solid resin, such as a novolac, dissolved in a solvent (the solvent portion of which may volatilize during heat up), or a high viscosity resin such as a partially polymerized resole thinned by a solvent, or it may be a curing agent for the resin.

"Curing agents" are agents required to either copolymerize with the resin or to activate the resin to a state in which the resin may polymerize or copolymerize. Cross-linking or activating agents fall into this category, as do catalysts required for most polymerization and cross-linking reactions.

"Gas release agents" are agents which may optionally be present which form liquid phases which seep through the coating and then evaporate, to create small channels within the coating to permit release of volatiles.

"Carbonaceous filler" is intended to mean those particulate carbonaceous materials present usually having a $C:H$ ratio greater than 2:1, and which have a particle size of less than 100 mesh. (All mesh sizes herein are in accordance with the Tyler standard sieve series). Carbonaceous filler is substantially insoluble in commonly used solvents such as methyl ethyl ketone or quinoline, while the phenolic resin and/or furane (in their completely cured state) are usually soluble therein.

"Carbonaceous additives" are those carbonaceous materials present usually having a $C:H$ ratio greater than 2:1, and which comprise particulate carbon aggregate having a particle size greater than 100 mesh preferably between −4 mesh and +100 mesh (that is, the material will pass a 4 mesh but will not pass a 100 mesh), and/or carbon fibers.

Pitch may be present as part of the carbon cement, as a modifying material, but requires the presence of a suitable curing agent, such as hexamethylenetetramine. Such a curing agent may be already present as the curing agent component of the carbon cement, or may be added thereto to facilitate cross-linkage between the resin and pitch, or linkage between the pitch and carbonaceous filler, or self-linkage between the polynuclear aromatics which comprise the bulk of pitch. Pitch may seep through the coating to provide gas release channels, and may, in the presence of appropriate curing agents, cross link with the resin and/or the carbonaceous filler.

While discussion of the present invention will focus on the use of $TiB_2$ as the preferred RHM, it is contemplated that any suitable RHM or alloys thereof may be utilized. $TiB_2$ is the preferred RHM due to its relatively low cost and high resistance to oxy-fluoride melts and molten aluminum. Other RHM materials may be substituted for $TiB_2$ in the coatings disclosed herein with success when appropriate changes in the carbon cement system are made to account for differences in wettability, surface area, particle size and porosity, etc. The $TiB_2$, or selected RHM, conveniently constitutes from about 10 percent to about 90 percent by weight of the coating composition, preferably from about 20 percent to about 70 percent. It has been observed that aluminum wettability starts at about 20 percent $TiB_2$ content, and about 35 to 60 percent $TiB_2$ appears optimal.

The coating composition utilized to coat the cathode of an aluminum cell may be applied as single or two layers, with a multiple layer coating system evidencing a strong bond, due to greater penetration of the pore structure of the carbon cathode by a first bonding layer which does not incorporate RHM. The RHM is then incorporated in a surface layer to obtain the benefit thereof, which surface layer adheres tightly to the bonding layer. Further, the use of multiple layers also reduces the size and number of shrinkage cracks in the $TiB_2$-containing top layer. The carbon cement that is aplied to the carbon substrate as a bonding layer prior to application of the coating composition may contain up to 40 percent carbonaceous filler and additive. The carbonaceous filler and additive help prevent cracking of the substrate due to stress forces encountered during curing and carbonization of the coating, by modifying the strength of the bond between the substrate and the bonding layer. In still another preferred embodiment, the carbon cement system may comprise about 10 percent by weight of carbon fiber, which acts to inhibit large formation.

This invention comprises a cathode coating composition which comprises a Refractory Hard Material, mix liquid, phenolic resin and/or furane resin precursor, curing agents, carbonaceous filler and carbonaceous additive, which may be made and applied in the following manner. The carbon cement of the coating composition comprises a mixture of carbonaceous filler, phenolic and/or furane resin, mix liquid, and curing agent(s). The furane resin monomer or precursor component, such as furfuryl alcohol, is frequently present as the mix liquid of the carbon cement, or as a component thereof. To this carbon cement are added an RHM such as $TiB_2$, and additional carbonaceous additive or aggregate, if desired. Generally, the powder components are mixed in a dry state, and the mix liquid is subsequently added while blending to form a composition suitable for coating cathode surfaces. For some cathode substrates, it may be desirable to apply a thin initial layer of carbon cement, with appropriate additives, after which cathode coating composition may be applied and smoothed to a 3mm (1/8 inch) to 19mm (3/4 inch) (or thicker) layer. Such an initial layer of carbon cement may be omitted, depending upon coating composition and cathode substrate properties. Such coatings may be applied to cathode substrates, such as carbon blocks, either in the cell itself or external to the cell. The coating may then be cured, for example, by bringing it to a temperature of about 100°C over a 1 hour period and holding for a period of 4 hours, followed by an increase to about 130°C to 160°C over a 1 hour period and holding for 16 or more hours. At this point, the coating will have cured to a relatively hard surface, and the cell may be charged with electrolyte and brought to operating temperature to complete the coating cure and carbonization in-situ. Alternatively, the cured coating may be partially or completely carbonized in a furnace external to the cell, or in the cell prior to electrolyte addition. Curing temperatures and time spans during the solvent and gaseous product removal stage are of course dependent upon mix liquid concentration, coating thickness, and other factors. Accordingly, this present invention is not to be limited by the exemplary time and temperature conditions recited.

It is also contemplated that the coating composition of this invention may be applied as a single layer or as a plurality of layers, which layers may be individually cured between applications. In accordance with this concept it is possible to produce a substantial coating thickness (e.g. 50 mm (2 inches) or more) by successively applying thin layers of coating composition and curing such layers individually. For greatest bonding strength, it may be desirable to treat the surface of each cured layer, by scuffing or wire brushing, for example, prior to application of the next layer. It is also possible, by this technique, to obtain a graduated RHM content within the coating, by changing the RHM concentration in successive layers of coating composition.

Preferred examples of carbon cements are commercially available cements provided as separate powder and mix liquid phases. The cement solids conveniently comprise from about 5 percent to about 70 percent by weight of the total coating composition, preferably from about 20 to about 45 percent. The mix liquid may vary from about 2 percent to about 40 percent by weight of the coating composition, for reasonable evaporation and curing rates, with from about 5 percent to about 25 percent being preferred to obtain a workable consistency.

A suitable, and preferred carbon cement is that which is commercially designated as UCAR® C—34, marketed by Union Carbide. The composition of UCAR® C—34 is believed to comprise a mixture of an oil, a soap, finely-divided carbonaceous particles, furfuryl alchol, a phenolic resin of the novolac type, and a hardening agent for the phenolic resin. The mixture of the oil, finely-divided carbonaceous particles, phenolic resin, and phenolic resin hardener can be prepared by blending the carbonaceous particles, phenolic resin and phenolic resin hardener together in any conventional manner, e.g. in a tumbling barrel, spraying the oil into the resulting mixture, and further blending the mixture until the oil has been incorporated therein and a substantially homogeneous blend formed. The mixture of soap and furfuryl alcohol can be prepared by heating the soap up to a temperature of about 100°C to liquify it, and then dissolving the molten soap in the furfuryl alcohol. Upon cooling, the soap remains dissolved in the furfuryl alcohol as a stable solution which can be stored until it is ready to be mixed with the mixture of oil, finely-divided carbonaceous particles, phenolic resin, and phenolic resin hardener. The two mixtures, one liquid and the other essentially solid can be readily mixed at room temperature, either manually or mechanically.

Many phenolic resins of the novolac type can be employed in the UCAR® C—34 cement. Such resins are produced by condensing phenols, such as phenol itself, m-cresol, p-cresol, o-cresol, 3,5-xylenol, 3,4-xylenol, 2,5-xylenol, p-ethylphenol, p-tert-butylphenol, p-amyl-phenol, p-tert-octyphenol, p-phenylphenol, 2,3,5-trimethylphenol, resorcinol, and the like, with aldehydes such as formaldehyde, furfuraldehyde, acetaldehyde, and the like. In practice, an unsubstituted Phenol-formaldehyde resin may be employed for cost considerations. Curing of the novolac resin to the thermoset state can be effected by means of any hardening agent conventionally employed to cure such resins. Such hardening agents are conventionally materials such as paraformaldehyde, furfural, hexamethylenetetramine, with appropriate catalysts when necessary, which upon the application of heat causes it to cross-link. The novolac resin is suitably employed in the UCAR® C—34 cement in an amount of from about 0.5 percent by weight of the coating composition to about 15 percent by weight, most preferably from about 2.5 percent by weight to about 8 percent by weight. In other carbon cements, novolac need not be present. The hardener for the resin is employed in an amount sufficient to cure such resin to the thermoset state, i.e., in an amount which will provide at least sufficient formaldehyde to react with and cross-link the resin, and provide sufficient alkaline catalyst for the reaction.

Many forms of finely-divided carbon or graphite can be employed as components of the UCAR® C—34 carbonaceous cement. Suitable carbonaceous materials include graphite flour, petroleum coke flour, pitch coke flour, calcined lampblack flour, thermatomic black (made by the passage of natural gas over hot refractories), and the like. Amounts of carbonaceous flour of e.g. from about 1 percent by weight of the coating composition to about 60 percent by weight, preferably from about 10 percent by weight to about 40 percent by weight, are suitable. Most preferably, the carbonaceous flour is a mixture of graphite and thermatomic black, with graphite flour being present in an amount of from about 2 percent by weight to about 50 percent by weight and the thermatomic black being present in an amount of from about 0.5 percent by weight to about 25 percent by weight.

Suitably, furfuryl alcohol is employed in UCAR®—34 cement, and may be present in an amount of from about 2 percent by weight of the coating composition to about 40 percent by weight, most preferably from about 4.5 percent by weight to about 20 percent by weight.

The UCAR® C—34 solids typically comprise about 80 percent by weight carbonaceous filler, about 10 to 20 percent phenolic resin, curing agent, and up to about 10 percent pitch. Additional materials such as silica and petroleum

Based upon the

based oils may also be present. The mix liquid of UCAR® C—34 typically comprises about 85 percent by weight furfuryl alcohol and about 15 percent soap.

Frequently, pitch is present in the coating composition, as a modifying agent, or as an additional binding agent. Pitch may be present in concentrations up to about 10 percent by weight of the coating composition.

Gas release agents are appropriately included in the coating composition to avoid blisters and/or excessively large cracks. Suitable gas release agents include combustible oils, soaps, and waxes.

A combustible oil can be employed as the gas release agent in the carbon cement. In order to avoid volatilizing the oil while curing the phenolic resin, it is desirable that the oil have a boiling point higher than the curing temperature of the resin. For this reason, oils having a boiling point above about 150°C, preferably above about 200°C are most useful, with oils having a boiling point above about 250°C being particularly preferred. While petroleum-base oils, such as paraffin oils, aromatic oils, anthracene oil, and asphaltic oils, are preferred, other oils such as animal and vegetable oils, can also be employed. Among the petroleum-base oils, the paraffin oils are preferred. Illustrative of the animal and vegetable oils which can be employed are palm kernel oil, olive oil, peanut oil, beef tallow oil, cottonseed oil, corn oil, soyabean oil, and the like. Amounts of oil of from about 0 percent by weight of the coating composition to about 3.5 percent by weight, preferably from about 0.4 percent by weight to about 2.0 percent by weight, are suitable.

Soaps may also be used as gas release agents. While the soap employed can be any of the metallic or quaternary ammonium salts of the fatty acids, cements prepared with either the neutral or acid quaternary ammonium soaps are more resistant to oxidation than cements prepared with more common metallic soaps, so that the use of the non-metallic soaps is preferred. Such non-metallic soap is produced by the reaction of a fatty acid with triethanolamine. The fatty acids employed, like the fatty acids employed to produce metallic soaps, generally contain from about 10 to about 24 carbon atoms, and can be either saturated or unsaturated. Among the saturated fatty acids which can be employed are capric, lauric, myristic, palmitic, stearic, arachidic, behenic, tetracosanoic, and the like. Typical unsaturated fatty acids include palmitoleic, oleic, linoleic, arachidonic, cetoleic, erucic, selacholeic, and the like. Amounts of soap of from about 0 percent by weight to about 27 percent by weight of the coating composition preferably from about 0.4 percent by weight to about 5.0 percent by weight, are suitable.

Various waxes may also be employed as gas release agents. Suitable waxes include various grades of petroleum wax including such usual paraffin waxes as refined slack, sweat, scale, block, and microcrystalline wax.

Additional suitable carbon cements are commercially available such as UCAR® C—38, (Union Carbide), a composition very similar to UCAR® C—34 but containing an oxidation inhibitor; Stebbins AR 25 HT, a furane resin composition comprised of furfuryl alcohol, partially polymerized furfuryl alcohol in forms such as difurfuryl ether, and a latent catalyst which could be phthalic anhydride or a derivative thereof; Stebbins AR 20 C, comprising a partially polymerized furane resin in forms such as difurfuryl ether, together with furfuraldehyde, and a latent catalyst which could be phthalic anhydride or a derivative thereof; and Atlas Carbo Korez (Trade Mark), a phenolic resin composition comprising a phenolic novolac or resole resin in a solvent as mix liquid, cured by combination with a phenolic novolac in the solids. The solvent is probably an aliphatic alcohol such as butyl alcohol. Other suitable carbon cements include Atlas Carbo Alkor (Trade Mark), comprising furfuryl alcohol monomer and partially polymerized forms such as difurfuryl ether and a latent catalyst which could be phthalic anhydride or a derivative thereof; Dylon GC, comprising furfuryl alcohol as solvent and monomer which cures together with a phenol formaldehyde and hexamethylenetetramine hardener; and Aremco 551 R, comprising furfuryl alcohol and a latent catalyst. Preferred carbon cements are based upon a phenol formaldehyde resin of the novolac family, although resoles are effective.

Furfuryl alcohol may be employed as the mix liquid in phenolic carbon cements, and is believed to react with the phenolic resin as it cures, and serves as a modifying agent for the resin. The use of furfuryl alcohol is preferred as it has been found that bonds having the high strength obtainable through the use of this mix liquid cannot be produced when other mix liquids are substituted for furfuryl alcohol. Thus, for example, when furfuraldehyde is employed in place of furfuryl alcohol in otherwise identical compositions, bonds are produced having only about half the strength of the bonds produced using the furfuryl alcohol.

It is desired that the coating composition be workable and easily spread and smoothed, as by a trowel. Insufficient mix liquid will make the mix dry and unspreadable, while excessive mix liquid may weaken the final coating and cause blistering. The coating composition is cured, by polymerizing and/or cross-linking, and losing volatiles, to form a relatively solid mass. Carbonization then converts this coating to a rigid matrix consisting essentially of non-graphitized and non-graphitizing carbon with RHM therein.

When a phenolic resin is utilized in a coating composition, such resin may constitute up to about 15 percent by weight of the coating composition. Although higher phenolic resin concentrations are possible, little advantage is gained, and prolonged curing and carbonization cycles are required.

Since the net final effect desired is to achieve a surface layer composed essentially of RHM and carbon, those materials other than the RHM which are present, e.g. the carbon cement and carbonaceous additive should be readily decomposable to a carbon residue. Such components as phenolic resin, furane resin, mix liquid, curing agent, carbon filler and carbon additive conveniently comprise from about 10 to about 90 percent of the composition. Preferably, the carbon cement system should comprise about 30 percent to about 80 percent of the coating composition.

In addition to the RHM and carbon cement which itself usually includes a carbonaceous filler material, it is desirable to provide additional particulate carbon. Some particulate carbon, either amorphous or graphitic, is frequently present in the commercially available cements mentioned heretofore. Further particulate carbon may be added, as either fine powder or coarse aggregate, or mixtures thereof, in the form of amorphous carbon or graphitic carbon.

Carbonaceous filler, which is usually present in commercially available carbon cements, is −100 mesh, preferably −325 mesh, and may comprise fine carbonaceous flour, graphite flour, crushed coke, crushed graphite, carbon black, and the like. The presence of such fine flours yields improved packing density for the granulometry used, that wicks up resin containing liquids to form a dense, highly bonded carbon matrix upon carbonization. Carbonaceous filler, as fine flour, advantageously comprises from about 1 percent to about 60 percent of the coating composition, with about 10 percent to about 40 percent being preferred.

The carbonaceous additive, or aggregate material, may run from −4 mesh to +100 mesh, and is preferably between −8 mesh and +20 mesh. Such coarse aggregate apparently permits fine cracking, thus relieving stress and allowing volatile emission, reduces shrinkage, and contributes to high carbon yield. Carbonaceous additive may comprise up to about 80 percent by weight of the coating composition, with about 5 to about 15 percent being preferred. An exemplary carbonaceous additive for use in the present invention is UCAR® BB—6 Electric Furnace Graphite Powder, having a size range from −8 to +65 mesh.

As previously set forth, it is preferred that carbon fiber be added to the coating composition as a crack arrestor. When such fiber is used, some variations in composition ranges have been found. When carbon fibers are used, they may preferably be made from pitch precursors, organic fiber precursors such as polyacrylonitrile, or rayon. Pitch fibers are considerably cheaper, and accordingly preferred. Fiber weight may range from zero percent to about 10 percent by weight of the coating composition, preferably from about 0.05 to about 3.0 percent. However, concentrations greater than about 10 percent become comparatively expensive, and less workable, with little apparent added benefit. Carbon fibers with lengths varying from 1 micron upward may be used with 1.6 mm (1/16 inch) to 13 mm (1/2 inch) lengths being preferred. Short fibers permit easier mixing and application, and may be used in higher concentration. Sized fibers consisting of parallel fiber strands bonded together by a material soluble in the mix liquid, are particularly preferred, since they blend most easily with the binder system. Fiber orientation may vary, and the fibers can be mixed as an integral part of the coating composition to facilitate the application procedure, or a layered structure may be created. Fiber mat rather than strands can also be used as layering material. Such a layered structure would obviously have a higher carbon fiber content than specified above.

The coating composition can be applied to each cathode block, cured, carbonized and then set into position. Alternatively, the cathode can be assembled and rammed, the coating applied and then cured. The carbonization process would occur in the cell in this case. Curing may be accomplished in stages, whereby the coated substrate is gradually raised to the desired curing temperature at which a relatively hard surface is obtained, followed by carbonization at temperatures up to 1100°C. In the initial stages of such curing, volatile components, such as the mix liquid volatiles and reaction products are removed, while at higher temperatures, e.g. 250°C to 1100°C, carbonaceous materials, such as cross-linked phenolic resin, are decomposed to leave a non-graphitizing carbonaceous matrix containing RHM. This carbonization step may be carried out directly after the initial cure by heating the coated carbon substrates to the desired temperature, or subsequent to said cathode substrate being placed in the electrolytic cell. Alternatively, the carbon cathode blocks may be placed in position in the cell after coating and initial curing, followed by "baking-in" of the coated cathode by cell start-up and operation.

The coating composition and application procedures are varied as different types of cathode materials are employed (e.g. carbon blocks made by various manufacturers). Examples of changes in coating composition are given below. These examples illustrate the relevance of the carbon cathode's physical properties, and also how the use of carbon additive and/or fibers improve coating properties. These examples are not intended to in any way limit the use of the coating composition.

Two types of coating systems may be considered by way of example: a one coat or a two coat system.

The one coat system is preferably used for cathode blocks which have high mechanical strengths (i.e. compressive strengths of $1.5 \times 10^7$ to $2.1 \times 10^7$ N.m$^{-2}$; 2200—3000 psi). These cathode blocks generally have smaller mean pore and grain sizes, and are more graphitic than other types of cathode material. An example of a type of cathode block material suitable for use with the single coat system is Sumitomo SK block. The single layer of coating composition may utilize carbon fibers or aggregate carbonaceous additive, and examples of each will be given.

The two coat system may be used with cathode block materials which have relatively low mechanical strengths (compressive strengths about $1.0 \times 10^7$ N.m$^{-2}$; 1500 psi). An example of this type of block material is Union Carbide grade CFN block. It is more difficult to create a good coated substrate structure when a single coating is used on this type of substrate, due to the substrate's mechanical weakness, and bonding problems. A single coating undergoes shrinkage when cured and carbonized, and may cause fracturing of the substrate, or may not bond firmly to the substrate, thus separating therefrom.

To avoid substrate or bond failure, an intermediate carbon cement layer may be added between the coating composition and the cathode substrate. The carbon cement (e.g. Union Carbide UCAR® C—34) develops a good bond to the substrate and, in turn, the coating composition bonds well to the carbon cement layer. The former bond is modified by adding carbonaceous additive to the intermediate layer, resulting in accommodation of stresses developed during curing and carbonization.

### Example 1

A coating composition was made by combining and mixing the following components (percentages are by weight): 36 percent TiB$_2$, −325 mesh; 34.2 percent Union Carbide UCAR® C—34 carbon cement solids, 19.7 percent UCAR® C—34 mix liquid; 10.1 percent Union Carbide calcined petroleum coke particles, grade 6—03.

The resulting coating composition was applied to a Sumitomo SK block substrate. Enough material to make a layer approximately 1.6 mm (1/16 inch) deep was applied and worked into the block surface. Additional material to make a layer approximately 16 mm (5/8 inch) thick was added, smoothed and levelled.

The coating was cured by heating at 25°C/hour to 100°C, holding 5 hours, heating at 25°C/hour to 140°C, holding 24 hours, and air cooling to room temperature.

After curing, several small cracks were evident but the coating-to-substrate bond was intact.

### Example 2

A coating composition was made by combining and mixing the following components: 36 percent TiB$_2$, −325 mesh; 29.4 percent UCAR® C—34 cement solids; 32.4 percent UCAR® C—34 mix liquid; 2.2 percent Great Lakes FORTAFIL® 6 mm (1/4 inch) fiber.

The resulting coating composition was applied to a Sumitomo SK block substrate and cured in a manner similar to that described in Example 1.

After curing, the coating exhibited no cracks such as were evident in the coating with the carbon aggregate used in Example 1. The carbon fibers appear to act as crack arrestors in the cathode coating, and so should result in a longer cathode life.

### Example 3

A piece of Sumitomo SK Block was utilized as a substrate for a coating composition consisting of 37.5 percent TiB$_2$, 30.6 percent UCAR® C—34 cement solids, 29.6 percent UCAR® C—34 mix liquid, and 2.3 percent FORTAFIL® carbon fiber. This material was applied in a manner similar to that of Example 1, to a final thickness of 10 mm (3/8 inch).

The coated substrate was then cured in accordance with the following cycle: The coated block was heated to 100°C at a rate of 25°C per hour, and held at this temperature fo 3 hours. Heating was continued at 25°C per hour to 140°C, at which temperature the block was held for 16 hours. The coated block was then removed and allowed to air cool to room temperature. No surface blisters, cracks, or bond defects were visible upon inspection.

The cured block was then carbonized by heating to 1000°C over a 24 hour period, in an argon atmosphere to avoid oxidation. The block was then permitted to cool to below 200°C under an Argon atmosphere, removed and cooled to room temperature. After cooling, examination revealed no defects. Integrity and substrate bond remained unaffected by carbonization.

### Example 4

A bonding layer material was made by mixing the following components: 52 percent UCAR® C—34 carbon cement solids; 13 percent Asbury graphite grade A—99; and 35 percent UCAR® C—34 mix liquid.

This composition was applied to a Union Carbide CFN cathode block substrate to a thickness of approximately 1.6 mm (1/16 inch). A 13 mm (1/2 inch) thick layer of coating composition as described in Example 1 was then applied, cured, and carbonized.

After curing and carbonization, the surface exhibited much the same appearance and properties as that of the coated surface of Example 1 (i.e. some cracking but a good bond).

### Example 5

A Union Carbide CFN block substrate was coated with a coating composition comprising 25 percent −325 mesh TiB$_2$; 31.2 percent UCAR® C—34 solids; 25 percent UCAR® C—34 mix liquid; 16.8 percent Asbury Grade 4234 graphite flour, and 2 percent Varcum 24—655 resin.

The coated substrate was cured by heating to 100°C over a one hour period, holding at 100°C for 4 hours, then heating to 135°C and holding for 16 hours, then allowing to cool to room temperature. A satisfactory bond and surface were observed.

The coated substrate was then carbonized by heating under Argon to 1000°C over a 24 hour period, and allowed to cool. The substrate remained intact, but the coating debonded from the substrate.

### Example 6

A two coat application to a Union Carbide CFN cathode block substrate was made, utilizing Union Carbide UCAR® C—34 carbon cement for the bonding layer, with no carbonaceous additives.

A coating composition was applied over the bonding layer, which composition comprised 28.2 percent −325 mesh $TiB_2$; 26.8 percent UCAR® C—34 solids; 19.4 percent UCAR® C—34 mix liquid; 11.3 percent Asbury Grade 4234 graphite flour; 4.2 percent Varcum 24—655 resin; and 10.1 percent carbonaceous additive having a size range from −8 to +20 mesh.

This coated substrate was cured by heating to 100°C over a one hour period, holding at 100°C for 19 hours, and cooling to room temperature. A satisfactory bond and surface were observed.

The coated substrate was then carbonized by heating in Argon to 1000°C over a 36 hour period, and allowed to cool to room temperature. The substrate block fractured approximately 6 mm (1/4 inch) below the interface of the bonding layer and the substrate during the carbonization step.

Example 7

A bonding layer comprising 38.7 percent UCAR® C—34 solids; 35.5 percent UCAR® C—34 mix liquid; and 25.8 percent Asbury Grade A—99 graphite, was applied to a Union Carbide grade CFN block substrate.

Over this was applied a coating composition comprising 27.5 percent −325 mesh $TiB_2$; 26.1 percent UCAR® C—34 solids; 21.4 percent UCAR® C—34 mix liquid; 11 percent Asbury Grade 4234 graphite flour; 4.1 percent Varcum 24—655 resin; and 9.9 percent carbonaceous additive having a size range from −8 to +20 mesh.

This coated substrate was cured by heating to 100°C over a one hour period, holding at 100°C for 4 hours, heating to 135°C and holding for 36 hours, and cooling to room temperature. A satisfactory bond and surface were observed.

The coated substrate was then carbonized by heating in Argon to 1000°C over a 24 hour period, and allowed to cool. A satisfactory bond and surface resulted.

These examples illustrate that variations in bonding layer composition and coating composition may be necessary to obtain satisfactory results. Example 5 illustrates bond failure, while Example 6 illustrates substrate failure resulting from too strong a bonding layer. Example 7, on the other hand, illustrates a successful two coat system application to a relatively weak cathode substrate, through modification of the bond layer.

The mesh numbers mentioned above correspond to sieve openings as follows:—

| Mesh No. | Opening |
|---|---|
| 4 | 4.699 mm |
| 8 | 2.362 mm |
| 20 | 833 µm |
| 65 | 208 µm |
| 100 | 147 µm |
| 325 | 43 µm |

Claims

1. A composition for coating the cathode surface of an aluminum reduction cell, said coating composition comprising Refractory Hard Material, a resin selected from phenolic resins, furane resin precursors, and mixtures thereof, mix liquid, curing agent, particulate carbonaceous filler having a particle size of less than 100 mesh, and carbonaceous additive in the form of particulate material having a particle size greater than 100 mesh and/or carbon fibers.

2. A coating composition according to claim 1, wherein said phenolic resin comprises a phenol formaldehyde resin, and said resin comprises from about 0.5 percent to about 15 percent of the coating composition.

3. A coating composition according to claim 1, wherein said furane resin precursor comprises furfuryl alcohol, which is present as the mix liquid in a concentration of from about 2 percent to about 40 percent of the coating composition.

4. A coating composition according to any one of the preceding claims, wherein said carbonaceous filler has a C:H ratio greater than 2:1, and comprises from about 10 to about 40 percent by weight of the coating composition.

5. A coating composition according to any one of the preceding claims, wherein said carbonaceous additive is selected from carbon aggregate having a particle size between about −4 mesh and +100 mesh, carbon fiber, and mixtures thereof, said carbonaceous additive having a C:H ratio greater than 2:1, and comprising from about 5 percent to about 15 percent by weight of the coating composition.

6. A coating composition according to claim 5, wherein carbon fiber comprises from about 0.05 percent to about 3.0 percent by weight of the coating composition.

7. A composition according to claim 1 comprising from about 10 to about 90 percent by weight Refractory Hard Material, from about 0.5 to about 15 percent by weight phenolic resin, from about 2 to about 40 percent by weight furane resin precursor, from about 1 to about 60 percent by weight carbonaceous filler, up to about 80 percent by weight carbonaceous additive, and effective amounts of curing agent and gas release agent.

8. A composition according to claim 7, further comprising up to about 10 percent by weight pitch.

9. A composition according to claim 1 comprising from about 35 percent to about 60 percent by weight titanium diboride, from about 2.5 percent to about 8 percent novolac resin, from about 4.5 percent to about 20 percent furfuryl alcohol, from about 10 percent to about 40 percent carbonaceous filler having a particle size −100 mesh, from about 5 percent to about 15 percent carbonaceous additive having a particle size from −4 to +100 mesh, from about 0.05 percent to about 3.0 percent carbon fiber, and effective amounts of curing agent and gas release agent.

10. A method for producing an aluminum wettable cathode surface for an aluminum reduction cell, which method comprises applying to a cathode substrate a coating composition comprising Refractory Hard Material, a resin selected from phenolic resins, furane resin precursors, and mixtures thereof, mix liquid, curing agent, particulate carbonaceous filler having a particle size of less than 100 mesh, and carbonaceous additive in the form of particulate material having a particle size greater than 100 mesh and/or carbon fibers, and curing and carbonising said composition.

11. A method according to claim 10, wherein said coating composition comprises from about 10 to about 90 percent Refractory Hard Material, from about 0.5 to about 15 percent phenolic resin, from about 2 to about 40 percent mix liquid, from about 1 to about 60 percent carbonaceous filler, up to about 80 percent carbonaceous additive, and effective amounts of curing agent and gas release agent.

12. A method according to either of claims 10 and 11, wherein said mix liquid comprises a furane resin precursor.

13. A method according to any one of claims 10 to 12, wherein said coating composition is applied to carbon cathode blocks external to the cell, and cured prior to placement in the electrolytic cell.

14. A method according to claim 13, wherein said coating composition is carbonized prior to placement in the cell.

15. A method according to claim 13, wherein said coating composition is carbonized in the cell.

16. A method according to claim 11, wherein said coating composition is applied to carbon cathode blocks external to the cell, and then cured and carbonized in the cell.

17. A method according to claim 11, wherein said coating composition is applied to the cathode substrate within the cell, and then cured and carbonized.

18. A method according to claim 10, wherein said coating material comprises from about 35 to about 60 percent titanium diboride, from about 2.5 to about 8 percent phenol formaldehyde, from about 4.5 to about 20 percent furfuryl alcohol, up to about 40 percent carbonaceous filler, about 5 to about 15 percent carbonaceous additive, and effective amounts of curing agent and gas release agent.

19. A method according to claim 18, wherein said carbonaceous additive includes carbon fiber.

20. A method according to claim 19, wherein said carbon fibers comprise from about 0.05 percent to about 3.0 percent by weight of the coating composition.

21. A method according to any one of claims 10 to 20, wherein said coating composition is applied in a plurality of layers.

22. A method according to claim 21, wherein the titanium diboride content changes in successive layers.

23. A method according to any one of claims 10 to 22, wherein said coating composition is applied to an intermediate bonding layer.

24. An aluminum-wettable cathode for an aluminum cell, comprising a cathode substrate having a surface layer, said surface layer being a cured and carbonised composition comprising Refractory Hard Material, a resin selected from phenolic resins, furane resin precursors, and mixtures thereof, mix liquid, curing agent, particulate carbonaceous filler having a particle size of less than 100 mesh, and carbonaceous additive in the form of particulate material having a particle size greater than 100 mesh and/or carbon fibers.

25. A cathode according to claim 24, wherein said Refractory Hard Material is titanium diboride.

26. A cathode according to claim 25, wherein said titanium diboride comprises from 35 to 60 percent by weight of the composition prior to carbonising.

27. A cathode according to any one of claims 24 to 26, further comprising a carbonaceous bonding layer between said cathode substrate and said surface layer.

28. An aluminum reduction cell comprising the cathode set forth in any one of claims 24 to 27.

29. An aluminum reduction cell according to claim 28, wherein said cathode is sloped from the horizontal.

**Patentansprüche**

1. Zusammensetzung zum Überziehen der Kathodenoberfläche einer Aluminiumreduktionszelle, mit folgenden Bestandteilen:

ein feuerfestes Hartmaterial,

ein Harz aus der Gruppe der Phenolharze, der Furanharzvorprodukte und deren Mischungen,

Mischungsflüssigkeit,

Härter,

partikelförmiger kohlenstoffhaltiger Füllstoff mit einer Partikelgröße von weniger als 100 Mesh

und kohlenstoffhaltiger Zusatzstoff in Gestalt partikelförmigen Materials mit einer Partikelgröße von mehr als 100 Mesh und/oder in Gestalt von Kohlenstofffasern.

2. Überzugszusammensetzung nach Anspruch 1, wobei das Phenolharz ein Phenolformaldehydharz umfaßt und dieses Harz ungefähr 0,5 bis 15 % der Überzugszusammensetzung ausmacht.

3. Überzugszusammensetzung nach Anspruch 1, wobei das Furanharzvorprodukt einen Furfurylalkohol umfaßt, der als Mischungsflüssigkeit in einer Konzentration von ungefähr 2 bis 40 % der Überzugszusammensetzung zugegen ist.

4. Überzugszusammensetzung nach einem der vorangehenden Ansprüche, wobei der kohlenstoffhaltige Füllstoff ein Verhältnis C:H von mehr als 2:1 aufweist und ungefähr 10 bis 40 Gew.-% der Überzugszusammensetzung ausmacht.

5. Überzugszusammensetzung nach einem der vorangehenden Ansprüche, wobei der kohlenstoffhaltige Zusatzstoff aus Kohlenstoffpartikeln mit einer Partikelgröße zwischen −4 Mesh und +100 Mesh, Kohlenstoffasern und Mischungen dieser Bestandteile ausgewählt ist, ein Verhältnis C:H von mehr als 2:1 aufweist und ungefähr 5 bis 15 Gew.-% der Überzugszusammensetzung ausmacht.

6. Überzugszusammensetzung nach Anspruch 5, wobei der Anteil der Kohlenstoffasern ungefähr 0,05 bis 3.0 Gew.-% der Überzugszusammensetzung ausmacht.

7. Überzugszusammensetzung nach Anspruch 1 mit folgenden Bestandteilen:
ungefähr 10 bis 90 Gew.-% feuerfestes Hartmaterial,
ungefähr 0,5 bis 15 Gew.-% Phenolharz,
ungefähr 2 bis 40 Gew.-% Furanharzvorprodukt,
ungefähr 1 bis 60 Gew.-% kohlenstoffhaltiger Füllstoff,
bis zu 80 Gew.-% kohlenstoffhaltiger Zusatzstoff
und wirksame Mengen von Härter und Gasentbindungsmittel.

8. Zusammensetzung nach Anspruch 7 mit zusätzlich bis etwa 10 Gew.-% Pech.

9. Zusammensetzung nach Anspruch 1 mit folgenden Bestandteilen:
ungefähr 35 bis 60 Gew.-% Titandiborid,
ungefähr 2,5 bis 8 % Novolakharz,
ungefähr 4,5 bis 20 % Furfurylalkohol,
ungefähr 10 bis 40 % kohlenstoffhaltiger Füllstoff mit einer Partikelgröße von −100 Mesh,
ungefähr 5 bis 15 % kohlenstoffhaltiger Zusatzstoff mit einer Partikelgröße von −4 bis +100 Mesh,
ungefähr 0,05 bis 3,0 % Kohlenstoffaser
und wirksame Mengen an Härter und Gasentbindungsmittel.

10. Verfahren zur Herstellung einer aluminiumbenetzbaren Kathodenoberfläche für eine Aluminiumreduktionszelle, bei welchem auf ein Kathodensubstrat eine Überzugszusammensetzung mit folgenden Bestandteilen aufgebracht wird:
feuerfestes Hartmaterial,
ein Harz aus der Gruppe der Phenolharze, der Furanharzvorprodukte und Mischungen dieser Stoffe,
Mischungsflüssigkeit,
Härter,
partikelförmiger kohlenstoffhaltiger Füllstoff mit einer Partikelgröße von weniger als 100 Mesh und/oder in Gestalt von Kohlenstoffasern,
kohlenstoffhaltiger Zusatzstoff in Form von Partikeln einer Partikelgröße von mehr als 100 Mesh
und bei welchem diese Überzugszusammensetzung ausgehärtet und karbonisiert wird.

11. Verfahren nach Anspruch 10, bei welchem die Überzugszusammensetzung ungefähr 10 bis 90 % feuerfesten Hartstoffs, ungefähr 0,5 bis 15 % Phenolharz, ungefähr 2 bis 40 % Mischungsflüssigkeit, ungefähr 1 bis 60 % kohlenstoffhaltigen Füllstoff, bis zu ungefähr 80 % kohlenstoffhaltigen Zusatzstoffs und wirksame Mengen an Härter und Gasentbindungsmittel umfaßt.

12. Verfahren nach Anspruch 10 oder 11, bei welchem die die Mischungsflüssigkeit ein Furanharzvorprodukt umfaßt.

13. Verfahren nach einem der Ansprüche 10 bis 12, bei welchem die Überzugszusammensetzung auf die aus Kohlenstoff bestehenden Kathodenblöcke außerhalb der Zelle aufgebracht und vor dem Einbau in die elektrolytische Zelle ausgehärtet wird.

14. Verfahren nach Anspruch 13, bei welchem die Überzugszusammensetzung vor dem Einbau in die Zelle karbonisiert wird.

15. Verfahren nach Anspruch 13, bei welchem die Überzugszusammensetzung in der Zelle karbonisiert wird.

16. Verfahren nach Anspruch 11, bei welchem die Überzugszusammensetzung auf die aus Kohlenstoff bestehenden Kathodenblöcke außerhalb der Zelle aufgebracht, dann jedoch in der Zelle ausgehärtet und karbonisiert wird.

17. Verfahren nach Anspruch 11, bei welchem die Überzugszusammensetzung auf das Kathodensubstrat in der Zelle aufgebracht und dann ausgehärtet und karbonisiert wird.

18. Verfahren nach Anspruch 10, bei welchem das Überzugsmaterial ungefähr 35 bis 60 % Titandiborid, ungefähr 2,5 bis 8 % Penolformaldehyd, ungefähr 4,5 bis 20 % Furfurylalkohol, bis zu ungefähr 40 % kohlenstoffhaltigen Füllstoffs, ungefähr 5 bis 15 % kohlenstoffhaltigen Zusatzstoffs und wirksame Mengen an Härter und Gasentbindungsmittel umfaßt.

19. Verfahren nach Anspruch 18, bei welchem der kohlenstoffhaltige Zusatzstoff Kohlenstoffasern umfaßt.

20. Verfahren nach Anspruch 19, bei welchem die Kohlenstoffasern ungefähr 0,05 bis 3,0 Gew.-% der Überzugszusammensetzung ausmachen.

21. Verfahren nach einem der Ansprüche 10 bis 20, bei welchem die Überzugszusammensetzung in mehreren Schichten aufgetragen wird.

22. Verfahren nach Anspruch 21, bei welchem sich der Titandiboridanteil in aufeinanderfolgenden Schichten ändert.

23. Verfahren nach einem der Ansprüche 10 bis 22, bei welchem die Überzugszusammensetzung auf eine bindungsvermittelnde Zwischenschicht aufgetragen wird.

24. Aluminiumbenetzbare Kathode für eine Aluminiumzelle, bei welcher ein Kathodensubstrat eine Oberflächenschicht aufweist und diese Oberflächenschicht eine ausgehärtete und karbonisierte Zusammensetzung mit folgenden Bestandteilen ist:
feuerfestes Hartmaterial,
ein Harz aus der Gruppe der Phenolharze, der Furanharzvorprodukte und Mischungen dieser Stoffe,
Mischungsflüssigkeit,
Härter,
partikelförmiger kohlenstoffhaltiger Füllstoff mit einer Partikelgröße von weniger als 100 Mesh
und kohlenstoffhaltiger Zusatzstoff in Gestalt partikelförmigen Materials mit einer Partikelgröße von mehr als 100 Mesh und/oder in Gestalt von Kohlenstoffasern.

25. Kathode nach Anspruch 24, bei welcher das feuerfeste Hartmaterial Titandiborid ist.

26. Kathode nach Anspruch 25, bei welcher das Titandiborid 35 bis 60 Gew.-% der Zusammensetzung vor dem Karbonisieren ausmacht.

27. Kathode nach einem der Ansprüche 24 bis 26, welche zusätzlich eine kohlenstoffhaltige bindungsvermittelnde Schicht zwischen dem Kathodensubstrat und der Oberflächenschicht umfaßt.

28. Aluminiumreduktionszelle mit einer Kathode nach einem der Ansprüche 24 bis 27.

29. Aluminiumreduktionszelle nach Anspruch 28, bei welcher die Kathode gegenüber der Horizontalen geneigt ist.

**Revendications**

1. Composition pour revêtir la surface de cathode d'une cellule de réduction d'aluminium, ladite composition de revêtement comprenant un Matériau Réfractaire Dur, une résine choisie parmi des résines phénoliques, des précurseurs de résine furane et leurs mélanges, un liquide de mélange, un agent de durcissement, une charge carbonée particulaire ayant une granulométrie de moins d'une maille 100, et un additif carboné sous la forme d'une matière particulaire ayant une granulométrie supérieure à une maille 100 et/ou des fibres de carbone.

2. Composition de revêtement selon la revendication 1, où ladite résine phénolique comprend une résine de phénol formaldéhyde et ladite résine forme environ 0,5 pour cent à environ 15 pour cent de la composition de revêtement.

3. Composition de revêtement selon la revendication 1, où ledit précurseur de résine furane comprend un alcool furfurylique, qui est présent sous la forme du liquide de mélange à une concentration d'environ 2 pour cent à environ 40 pour cent de la composition de revêtement.

4. Composition de revêtement selon l'une quelconque des revendications précédentes où ladite charge carbonée a un rapport C:H plus important que 2:1 et forme environ 10 à environ 40 pour cent en poids de la composition de revêtement.

5. Composition de revêtement selon l'une quelconque des revendications précédentes où ledit additif carboné est choisi parmi un agrégat de carbone ayant une granulométrie comprise entre une maille d'environ −4 et une maille d'environ +100, une fibre de carbone et leurs mélanges, ledit additif carboné ayant un rapport C:H plus important que 2:1 et formant environ 5 pour cent à environ 15 pour cent en poids de la composition de revêtement.

6. Composition de revêtement selon la revendication 5, où la fibre de carbone forme environ 0,05 pour cent à environ 3,0 pour cent en poids de la composition de revêtement.

7. Composition selon la revendication 1 comprenant environ 10 à environ 90 pour cent en poids d'un Matériau Réfractaire Dur, environ 0,5 à environ 15 pour cent en poids de résine phénolique, environ 2 à environ 40 pour cent en poids de précurseur de résine furane, environ 1 à environ 60 pour cent en poids de la charge carbonée, jusqu'à environ 80 pour cent en poids de l'additif carboné et des quantités efficaces d'agent de durcissement et d'agent de libération des gaz.

8. Composition selon la revendication 7, comprenant de plus jusqu'à environ 10 pour cent en poids de brai.

9. Composition selon la revendication 1, comprenant environ 35 pour cent à environ 60 pour cent en poids de diborure de titane, environ 2,5 pour cent à environ 8 pour cent de résine novolaque, environ 4,5 pour cent à environ 20 pour cent d'alcool furfurlyique, environ 10 pour cent à environ 40 pour cent d'une charge carbonée ayant une granulométrie de maille −100, environ 5 pour cent à environ 15 pour cent d'additif carboné ayant une granulométrie d'une maille −4 à une maille +100, environ 0,05 pour cent à environ 3,0 pour cent d'une fibre de carbone et des quantités efficaces d'un agent durcissant et d'un agent de libération des gaz.

10. Méthode de production d'une surface de cathode mouillable par l'aluminium pour une cellule de réduction d'aluminium, laquelle méthode consiste à appliquer, à un substrat de cathode, une composition de revêtement comprenant un Matériau Réfractaire Dur, une résine choisie parmi les résines phénoliques, des précurseurs de résine furane et leurs mélanges, un liquide de mélange, un agent de durcissement, une charge carbonée particulaire ayant une granulométrie d'une maille inférieure à 100, et un additif carboné sour la forme d'une matière particulaire ayant une granulométrie plus grande qu'une maille 100 et/ou des fibres de carbone et à durcir et à carboniser ladite composition.

11. Méthode selon la revendication 10, où ladite composition de revêtement comprend 10 à environ 90 pour cent d'un Matériau Réfractaire Dur, environ 0,5 à environ 15 pour cent de résine phénolique, environ 2 à environ 40 pour cent du liquide de mélange, environ 1 à environ 60 pour cent de charge carbonée, jusqu'à environ 80 pour cent de l'additif carboné et des quantités efficaces d'un agent de durcissement et d'un agent de libération des gaz.

12. Méthode selon l'une quelconque des revendications 10 ou 11, où ledit liquide de mélange comprend un précurseur de résine furane.

13. Méthode selon l'une quelconque des revendications 10 à 12, où ladite composition de revêtement est appliquée à des blocs de cathode en carbone à l'extérieur de la cellule, et est durcie avant mise en place dans la cellule électrolytique.

14. Méthode selon la revendication 13, où ladite composition de revêtement est carbonisée avant mise en place dans la cellule.

15. Méthode selon la revendication 13, où ladite composition de revêtement est carbonisée dans la cellule.

16. Méthode selon la revendication 11, où ladite composition de revêtement est appliquée à des blocs de cathode en carbone à l'extérieur de la cellule puis est durcie et carbonisée dans la cellule.

17. Méthode selon la revendication 11, où ladite composition de revêtement est appliquée au substrat de cathode dans la cellule, puis est durcie et carbonisée.

18. Méthode selon la revendication 10, où ledit matériau de revêtement comprend environ 35 à environ 60 pour cent de diborure de titane, environ 2,5 à environ 8 pour cent de phénol formaldéhyde, environ 4,5 à environ 20 pour cent d'alcool furfurylique, jusqu'à environ 40 pour cent d'une charge carbonée, environ 5 à environ 15 pour cent d'un additif carboné, et des quantités efficaces d'un agent durcissant et d'un agent de libération des gaz.

19. Méthode selon la revendication 18, où ledit additif carboné comprend de la fibre de carbone.

20. Méthode selon la revendication 19, où lesdites fibres de carbone forment environ 0.05 pour cent à environ 3,0 pour cent en poids de la composition de revêtement.

21. Méthode selon l'une quelconque des revendications 10 à 20, où ladite composition de revêtement est appliquée en un certain nombre de couches.

22. Méthode selon la revendication 21, où la teneur en diborure de titane change dans les couches successives.

23. Méthode selon l'une quelconque des revendications 10 à 22, où ladite composition de revêtement est appliquée à une couche intermédiaire de liaison.

24. Cathode mouillable par l'aluminium pour une cellule d'aluminium, comprenant un substrat de cathode ayant une couche de surface, ladite couche de surface étant une composition durcie et carbonisée comprenant un matériau réfractaire dur, une résine choisie parmi des résines phénoliques, des précurseurs de résine furane, et leurs mélanges, un liquide de mélange, un agent durcissant, une charge carbonée particulaire ayant une granulométrie de moins d'une maille 100, et un additif carboné sous la forme d'une matière particulaire ayant une granulométrie plus importante qu'une maille 100 et/ou des fibres de carbone.

25. Cathode selon la revendication 24, où ledit matériau réfractaire dur est du diborure de titane.

26. Cathode selon la revendication 25, où ledit diborure de titane comprend de 35 à 60 pour cent en poids de la composition avant carbonisation.

27. Cathode selon l'une quelconque des revendications 24 à 26, comprenant de plus une couche carbonée de liaison entre ledit substrat de la cathode et ladite couche de surface.

28. Cellule de réduction d'aluminium comprenant la cathode divulguée selon l'une des revendications 24 à 27.

29. Cellule de réduction d'aluminium selon la revendication 28, où ladite cathode est en pente par rapport à l'horizontale.